# EUROPEAN PATENT SPECIFICATION

(11) **EP 3 018 932 B1**
(45) Date of publication and mention of the grant of the patent: **15.11.2017**
(21) Application number: 14382482.9
(22) Date of filing: 28.11.2014
(51) Int. Cl.: H04W 24/10, H04W 24/08

(54) **A computer implemented method and computer programs for determining network quality indicators**
Computerimplementiertes Verfahren und Computerprogramme zur Bestimmung von Netzwerkqualitätsanzeigern
Procédé mis en oeuvre par ordinateur et programmes informatiques permettant de déterminer des indicateurs de qualité de réseau

(30) Priority: 05.11.2014 EP 14382439
(43) Date of publication of application: 11.05.2016
(73) Proprietor: Telefonica Digital España, S.L.U., 28013 Madrid (ES)
(72) Inventor: Neystadt, John Eugene, 44471 Kfar-Saba (IL); Serna Pozuelo, Jorge, 28013 Madrid (ES)
(74) Representative: Carlos Hernando, Borja

(56) References cited:
- WO-A1-2008/040021
- WO-A1-2013/101881
- US-A1- 2007 037 570
- US-A1- 2010 009 674

## Description

### Field of the invention

The present invention generally relates to mobile communications. In particular, the invention relates to a computer implemented method and computer programs products for determining network quality indicators, so that the computed network indicators can be used for automatically configure user preferences for receiving/performing communication calls, via a VoIP or via a PSTN network.

### Background of the invention

Mobile communication applications, such as Skype®, Viber®, Line®, Tu Go®, provide an ability for receiving incoming communication calls via mobile application, using a Voice/Video Over IP (VoIP) interface (such as Session Initiation Protocol (SIP)), in addition to communication device OS ability to receive native mobile networks call over GSM, VoLTE (Voice over LTE) or other protocols. A key aspect influencing user experience is for communication services to decide whether to route an incoming call to a communication device via native (aka Public Switched Telephone Network (PSTN)), to the Communication Application via VoIP interface or both.

Communication Services allow users to manage their preferences on whether to receive calls via VoIP or PSTN network on their mobile devices which they are connected to.

Patent US-B2-8457606 discloses different techniques for allowing choosing among different methods to terminate a call (conventional cellular networks, VoIP calls over non-cellular networks, VoIP calls over cellular data networks, etc.). However, nor in said US patent neither in any other document, a method is provided for determining/computing, the quality of communication networks in order to help users in deciding their preferences for receiving/performing communication calls.

US patent application US-A1-2007037570 discloses systems and methods for measuring the performance of a provider of communications service. A plurality of mobile communications devices measure average power received, signal to noise ratio, voice quality, blocked and dropped calls, or any combinations of such measurements. The device may also receive a set of data identifying the location of the device. The device may transmit one or more communications signals to a server computer system with such measurements and location data. The measurements and location data may be stored in a database, and new data may be created and transmitted illustrating a subset of the measurements and location data.

International patent application WO-A1-2013101881 discloses systems and methods of monitoring call quality. When a voice over Internet protocol (VOIP) telephone call is being conducted by a mobile telephony device, measurements of at least one condition that exists for the mobile telephone device during the VOIP telephone call are taken during the duration of the telephone call. The measurements could be taken periodically as the VOIP telephone call progresses. The measured condition is one that could affect the perceived quality of the VOIP telephone call. The measurements of the at least one condition are recorded against the telephone call for later use and analysis. The recorded information may be analyzed to determine how to modify a setting of the mobile telephony device to improve the quality of VOIP telephone calls conducted with the mobile telephony device.

### Summary of the Invention

Embodiments of present invention provides methods and computer programs for determining network quality indicators, based on past calls of a user with other users of a communication service, so that, particularly, the computed network quality indicators may be used to automatically configure user preferences for receiving/performing calls via VoIP (e.g. over WiFi) or as a native call via PSTN network.

To that end, according to an aspect of the invention a computer implemented method for determining network quality indicators is provided, said method comprising performing a communication call between a first user having a mobile device with a communication application installed therein which is connected to a VoIP communication service through a communication network such as a wireless network with a second user via the communication service; and computing, based on information extracted from said at least one communication call, by means of executing an algorithm running in a processor, a quality indicator descriptive of technical conditions (i.e. descriptive of the goodness of the network in terms of good QoS, no distortion or interferences, etc.) of the communication network used for performing the at least one communication call.

According to the invention said information can be extracted either by the communication application or, alternatively, by the communication service, and principally includes an identifier of the communication network, or location information of the mobile device during the communication call, and quality parameters related to the performed communication call. For instance, the quality parameters can include at least one of: the average network signal strength during the communication call, in case of a wireless network; the duration of the communication call; the Average Call Duration (ACD), or average length of the communication call on that communication network used compared to the ACD on other communication networks; the Call Answer Rate (ASR), or number of successfully answered communication calls on that communication network used; a numerical indication score, such as a Mean Opinion Score (MOS), of the communication call, which may be a subjective score provided by the first and second users; the number of short calls, i.e. communication calls shorter than few seconds, on that communication network used compared to other communication networks; and a call result indicating if the communication call has been dropped or hanged or if other communication calls between the first user and the second user has been repeated after the communication call, among other additional measurements that can help to determine communication call quality.

In an embodiment, the network quality indicator is computed by the communication application.

In another embodiment, the network quality indicator is computed by a telemetry server after the latter having received the information from the communication application or from the communication service. In this particular case, the computed network quality indicator can be further stored in a database for a later retrieval or use.

According to said described embodiments, each one of the quality parameters used in said information has an associated weight, which can be configured manually, e.g. by a user or system administrator, or determined automatically by the system. If the weights have been configured to be determined automatically, a machine learning algorithm can be used to find the optimal weight. The network quality indicator can be computed as the weighted sum, i.e. as the sum of the products of each of the quality parameters used and their corresponding weight. In this case, a minimum configurable threshold for each quality parameter used can be taken into account to indicate an "unsuitable" network quality indicator when at least one of the quality parameters is below the threshold. This threshold(s) can be configured either manually by the user or automatically. In this latter case a machine learning algorithm can be used to find the optimal thresholds.

In another embodiment, the computed network quality indicator is based on the average network signal strength during the communication call so the method segments the computed network quality indicator for different signal strengths intervals of said wireless network.

Moreover, in some embodiments, in order to compute the network quality indicator the telemetry server can further use information extracted from an additional communication call performed by another user (different to said second user) connected to the communication service through said communication network.

In yet other embodiments, the computed network quality indicator is used to determine whether the communication application registers to the communication service through the communication network, in this case, the first user can receive/perform further communication calls from/to at least the second user via a VoIP network.

In case the computed network quality indicator is above or equal a given threshold said registering is performed. On contrary, in case the computed network quality indicator is below a given threshold different alternatives may occur. In a first alternative, the communication application is the one determining that the computed network quality indicator is below the given threshold, and then the communication application may not request the registration to the communication service through said communication network; hence the first user will receive/perform further communication calls via a PSTN network. In a second alternative, the communication application request the registration and it is the communication service the responsible for determining that the computed network quality indicator is below the given threshold, and then the communication service may reject the registration, so the first user will also receive/perform further communication calls via a PSTN network. Finally, in a third alternative, the communication application request the registration, and it is again the communication service the one determining that the computed network quality indicator is below the given threshold but the communication service will accept this registration, but will inform the communication application that the computed network quality indicator is below the given threshold. In this latter alternative, the communication application can de-register from the communication service, and so, the first user can receive/perform further communication calls via a PSTN network.

The identifier of the communication network, for said wireless network, can be based on a WiFi-BSSID (Basic Service Set Identifier)), the Cell ID (CID) used in GSM networks, the Base Station ID (BID) used in CDMA networks, or the UTRAN/GERAN Cell Identity (UC-Id), which is a 32-bit value concatenating the Radio Network Controller (RNC) and Cell ID, used in WCDMA networks.

Alternatively, a network can be identified by a geographical area (e.g. a circle with a configurable radius). In this case location information of the computing device needs to be reported together with the communication call quality indicators. The location information can comprise the list of visible (i.e. detectable) wireless networks, for instance a list of BSSIDs, or even cell tower identifiers, and a cellular network connection indicator, for instance, the Cell ID (CID) used in GSM networks, the Base Station ID (BID) used in CDMA networks, or the UTRAN/GERAN Cell Identity (UC-Id).

Also an IP2Location™ web service can be used to determine the location of the device based on device's IP, if connected to a public communication network, or on a communication protocol, such as STUN, in order to discover its public IP address, in case it is connected behind NAT box.

According to another aspect of the invention software programs to perform the method embodiment steps and operations are also provided. More particularly, a computer program product is one embodiment that has a computer-readable medium including computer program instructions encoded thereon that when executed on at least one processor in a computer system causes the processor to perform the operations indicated herein as embodiments of the invention.

### Brief Description of the Drawings

The previous and other advantages and features will be more fully understood from the following detailed description of embodiments, with reference to the attached drawings, which must be considered in an illustrative and non-limiting manner, in which:
Fig. 1 is a general system architecture overview of all the elements, according to some embodiments, that can be used in the present invention for determining network quality indicators.
Fig. 2 is a flow diagram illustrating how the network quality is measured, according to some embodiments.

### Detailed Description of Several Embodiments

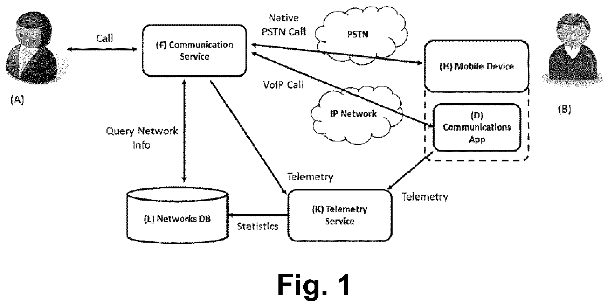

According to Fig. 1 the different elements that can be used for determining network quality indicators are: a communication service F, a telemetry server K, a database L and a user B mobile device H having installed therein a communication application D. For simplicity of the figure, the computing device used by user A for communicating with user B has not been illustrated.

According to an embodiment, once a communication call has been performed between user B and user A via the communication service F (in this case a VoIP communication service therefore the communication call performed between said two users being a VoIP call), the communication application D can keep an historical of said communication call over a configurable period of time (e.g. an hour, a day, a week, etc.), keeping an identifier of the communication network used (e.g. the WiFi-BSSID for a wireless network) and quality parameters concerning the communication call such as (only one is necessary): the duration of the communication call; a numerical indication describing if said communication call is a short call, an Average Call Duration (ACD) parameter; a Call Answer Rate (ASR) parameter; a numerical indication score of the communication call (e.g. a MOS); and a call result indicating if the communication call has been dropped or hanged, or if other communication calls between said two users B, A has been repeated after the communication call.

The communication application D then can loop over said historical and compute, by means of executing an algorithm running in a processor (not illustrated) and based on the information kept, a quality indicator descriptive of technical conditions of the communication network used for performing the communication call.

The quality for a same communication network, e.g. WiFi hotspot (identified by its network identifier) may vary significantly depending on the strength of the signal. Thus a same communication network may be very good for users located in the first floor of a building, in which the signal strength is high, but may be very bad for users located in the third floor in which the signal strength may be lower. Thus according to another embodiment, in particular when the computed network quality indicator comprises the average network signal strength during the communication call, the computed network quality indicator may be segmented for different signal strength intervals of the communication network.

Then, when communication application D is connected to a known IP communication network (determined by its network identifier) if the network quality indicator is known for that IP communication network and is below a configurable threshold, communication application D can choose not to register to this IP communication network for VoIP communication calls (optionally asking user B to approve), or signal the communication service F to prefer a PSTN calling (for example by setting PrefersVoIP parameter, as described in the co-pending patent application EP14382310 of the same applicant of present invention, during registration in REGISTER to OFF.

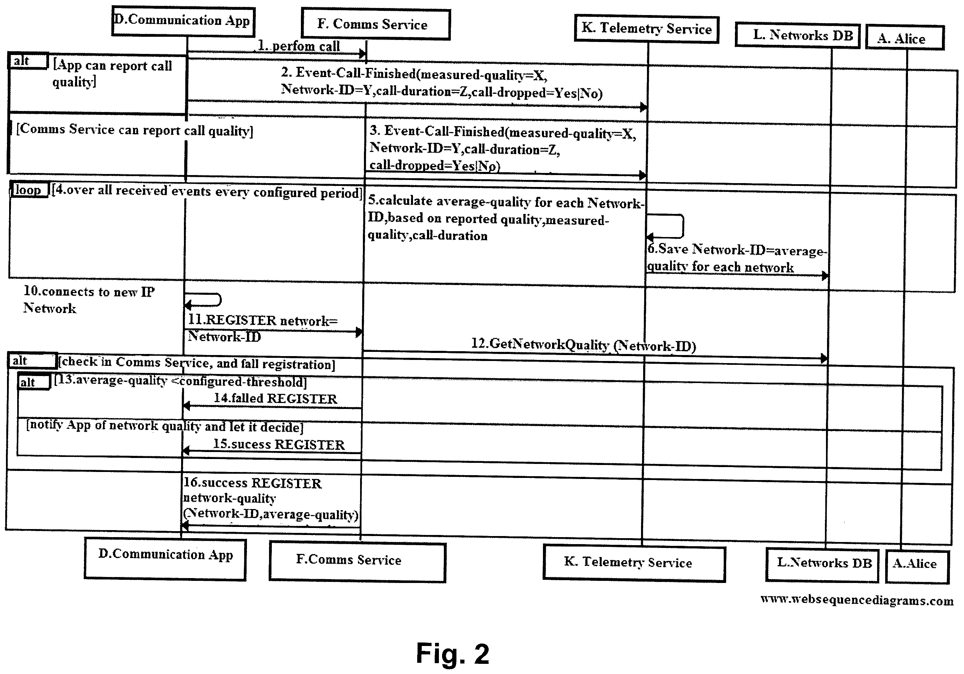

Fig. 2 illustrates another embodiment of the present invention, in this case once the VoIP communication call is completed (1), communication application D sends (2) the information kept (extracted) from said VoIP communication call (i.e. the network identifier and the quality parameter(s)) to the telemetry server K. Alternatively, the information extracted from the VoIP communication call can be generated by the communication service F itself, and sent (3) to the telemetry server K. This alternative works when the actual call media passes through the network communication service F, so that the communication service F can keep the parameters needed for the quality measurement. For instance, this alternative is not possible, when call media is handed off and connected directly between the communication application D of the called and the caller, such as in WebRTC, or other peer-to-peer networks.

An analytical unit of the telemetry server K that has at least one processor executing an algorithm can then loop every configurable interval (e.g. 1 week) and compute the network quality indicator. As amount of the events from multiple communication applications may be very large, techniques, such as map reduce can be applied, incrementally aggregating network quality events, and eventually reaching the computed network quality indicator for each network. Telemetry server K then saves the computed network quality indicator (6) in a network database (L).

Each quality parameter has an associated weight, which can be automatically determined or manually configured. In the case the weight(s) is(are) automatically determined a machine learning algorithm may be used to find the optimal weight(s).The network quality indicator which as described before may be computed either by the communication application D or by the telemetry server K is computed, in accordance with an embodiment, as the weighted sum of the products of each of the quality parameters used and their corresponding weight.

Moreover, the communication application D or the telemetry server K can indicate that the computed network quality indicator is "unsuitable" if at least one of the quality parameters is below a configurable minimum threshold. It has to be noted that the weight may be positive or negative, as some of the quality parameters are better are they are higher, whereas others (number of short calls, number of dropped calls) are better if they are lower. Apart from that, the minimum threshold can be configured manually or automatically, for example using also machine learning algorithms, that find optimal thresholds corresponding to subjective user perception of quality calls.

The telemetry server K, according to other embodiments, to compute the network quality indicator can also use information extracted from other additional VoIP communication calls performed by other users connected to the communication service F through the communication network.

To manage network preferences from the mobile communication application D, when communication application D detects connection to a new IP communication network, it needs to register to a VoIP Service, which can be done for example by sending REGISTER SIP request and include the communication network identifier in the request and optionally indicate, this communication network as preferred for receiving VoIP communication calls (e.g. by sending PrefersVoIP=ON as described in the co-pending patent application EP14382310), based on previously known network quality or user preferences.

Communication service F, then queries (12) the database L to retrieve the computed network quality indicator for the communication network identifier specified by the communication application D in the registration request. In some embodiments the signal strength level of the network (in case of a wireless network, e.g. WiFi) may be also reported, so that the retrieved computed network quality indicator is specific for the corresponding signal strength interval.

There are different options to handle communication networks when the computed network quality indicator has low quality (poor technical conditions) - in the communication service F or in the communication application D. For instance, in a first option, the communication application D can check (13) that the computed network quality indicator is below the configurable threshold, and in this case may decide not to request registration to the communication service F through that communication network. In a second option the communication service F can be the one that checks (13) that the received computed network quality indicator is below the configurable threshold, in this case, the communication service F rejects the registration request of the communication application D (e.g. SIP REGISTER), sending (14) a fail result to the communication application D. If on the contrary the computed network quality indicator was ok, the communication service will allow (15) the registration. In a third option, the communication Service F always allows the REGISTER request, including (16) the computed network quality indicator in the response (or sending a separate message after REGISTER response) to the communication application D. Communication application D then receives the response/message with the computed network quality indicator, and can decide to unregister from VoIP network completely or to re-register with a different preference (for example by including PrefersVoIP=OFF or ON as described in the co-pending patent application EP14382310), depending on whether the received computed network quality indicator is below or above the configurable threshold.

While the foregoing is directed to embodiments of the present invention, other and further embodiments of the invention may be devised without departing from the basic scope thereof. For example, other aspects may be implemented in hardware or software or in a combination of hardware and software.

Additionally, the software programs included as part of the invention may be embodied in a computer program product that includes a computer useable medium. For example, such a computer usable medium can include a readable memory device, such as a hard drive device, a flash memory device, a CD-ROM, a DVD/ROM, or a computer diskette, having computer readable program code segments stored thereon. The computer readable medium can also include a communications link, either optical, wired, or wireless, having program code segments carried thereon as digital or analog signals. The scope of the present invention is determined by the claims that follow.

The scope of the invention is defined by the attached claims.

## Claims

1. A computer implemented method for determining network quality indicators, comprising:
- performing at least one communication call, between a first user (B), having a mobile device (H) with a communication application (D) installed therein which is connected to a VoIP communication service (F) through a communication network, with at least a second user (A) via said communication service (F); and
- computing, based on information extracted from said at least one communication call, by means of executing an algorithm running in a processor, a quality indicator descriptive of technical conditions of said communication network used for performing the at least one communication call,
wherein said information is extracted from the at least one communication call by the communication application (D) or by the communication service (F) and includes at least one of an identifier of the communication network used or location information of the mobile device (H) during the communication call, and quality parameters related to the at least one communication call including at least one of:
• the duration of the communication call;
• an Average Call Duration, or ACD;
• a Call Answer Rate, or ASR;
• a numerical indication describing if the communication call being a short call;
• a numerical indication score of the communication call; and
• a call result indicating if the communication call has been dropped or hanged, or if other communication calls between the first user (B) and the second user (A) has been repeated after the communication call
the method being **characterized in that** each one of the quality parameters used for said information has an associated weight, automatically determined or manually configured, wherein if the weight(s) is(are) automatically determined the method comprises using a machine learning algorithm to find an optimal weight, wherein the network quality indicator is computed by performing the sum of the products of each of the quality parameters used and their corresponding weight.

2. The computer implemented method of claim 1, wherein the network quality indicator is computed by the communication application (D).

3. The computer implemented method of claim 1, wherein the network quality indicator is computed by a telemetry server (K) after the telemetry server (K) having received said information from the communication application (D) or from the communication service (F).

4. The computer implemented method of claim 1, wherein a minimum configurable threshold is determined for each quality parameter used, wherein each threshold is automatically determined or manually configured, wherein if automatically determined a machine learning algorithm is used to find the optimal threshold, wherein an unsuitable network quality indicator is determined when at least one of the quality parameters is below its corresponding threshold.

5. The computer implemented method of any of previous claims, wherein the communication network is a wireless network.

6. The computer implemented method of claim 5, wherein the computed network quality indicator comprises an average network signal strength during the communication call, and the method further comprising segmenting the computed network quality indicator for different signal strengths intervals of said wireless network.

7. The computer implemented method of claim 3, or 5 or 6 when depending on claim 3, in which information extracted from at least one additional communication call performed by at least one additional user connected to said communication service (F) through said communication network is used to compute the network quality indicator.

8. The computer implemented method of any of previous claims, further comprising using the computed network quality indicator to determine whether said communication application (D) registers to said communication service (F) through said communication network in order the first user (B) receiving/performing further communication calls from/to at least the second user (A) via a VoIP.

9. The computer implemented method of claim 8, comprising registering the communication application (D) to the communication service (F) through said communication network if the computed network quality indicator is above or equal a given threshold.

10. The computer implemented method of claim 8, wherein in case the computed network quality indicator is below a given threshold, the communication application (D) does not request the registration to the communication service (F) through said communication network, and the first user (B) comprising receiving/performing further communication calls via a PSTN network.

11. The computer implemented method of claim 8, wherein in case the computed network quality indicator is below a given threshold, the communication service (F) comprising rejecting the registration of the communication application (D) through the communication network, and the first user (B) comprising receiving/performing further communication calls via a PSTN network.

12. The computer implemented method of claim 8, wherein the communication service (F), in case the computed network quality indicator is below a given threshold, comprises:
- accepting the registration of the communication application (D) through said communication network, and
- informing the communication application (D) that the computed network quality indicator is below the given threshold.

13. The computer implemented method of claim 12, further comprising de-registering, the communication application (D) from the communication service (F), and the first user receiving/performing further communication calls via a PSTN network.

14. A computer program product comprising executable instructions that, when executed by one or more processors of a computer system, cause the computer system to perform the method of any one of the preceding claims 1 to 13.

## Patentansprüche

1. Computerimplementiertes Verfahren zur Bestimmung von Netzwerkqualitätsanzeigern, umfassend:
- Durchführen von mindestens einem Kommunikationsanruf zwischen einem ersten Benutzer (B), welcher eine Mobilvorrichtung (H) mit einer darin installierten Kommunikationsanwendung (D), welche mit einem VoIP-Kommunikationsdienst (F) durch ein Kommunikationsnetzwerk verbunden ist, aufweist, und mindestens einem zweiten Benutzer (A) über den Kommunikationsdienst (F); und
- auf aus dem mindestens einen Kommunikationsanruf gezogenen Informationen basierendes Berechnen eines Qualitätsanzeigers, welcher die technischen Bedingungen des zum Durchführen von dem mindestens einen Kommunikationsanruf verwendeten Kommunikationsnetzwerks beschreibt, durch Ausführen eines in einem Prozessor laufenden Algorithmus,
wobei die Informationen aus dem mindestens einen Kommunikationsanruf durch die Kommunikationsanwendung (D) oder durch den Kommunikationsdienst (F) gezogen werden und mindestens eines von einer Kennung des verwendeten Kommunikationsnetzwerks oder Standortinformationen der Mobilvorrichtung (H) während des Kommunikationsanrufs und Qualitätsparameter, die mindestens einen Kommunikationsanruf betreffen, enthält, wobei sie mindestens eines von Folgendem enthalten:
• die Dauer des Kommunikationsanrufs;
• eine durchschnittliche Anrufdauer bzw. ACD:
• eine Call Answer Rate bzw. ASR:
• eine numerische Angabe, welche beschreibt, ob der Kommunikationsanruf ein kurzer Kommunikationsanruf ist;
• eine Bewertung durch eine numerische Angabe des Kommunikationsanrufs; und
• ein Anrufergebnis, welches anzeigt, ob der Kommunikationsanruf abgebrochen wurde oder ob aufgelegt wurde oder ob andere Kommunikationsanrufe zwischen dem ersten Benutzer (B) und dem zweiten Benutzer (A) nach dem Kommunikationsanruf wiederholt wurden,
wobei das Verfahren **dadurch gekennzeichnet ist, dass** jeder von den für die Informationen verwendeten Qualitätsparametern ein zugehöriges Gewicht aufweist, welches automatisch bestimmt oder manuell konfiguriert wird, wobei, wenn das Gewicht (die Gewichte) automatisch bestimmt wird (werden), das Verfahren das Verwenden eines maschinellen Lernalgorithmus zum Finden des optimalen Gewichts umfasst, wobei der Netzwerkqualitätsanzeiger durch Ausführen der Summe der Produkte von jedem der verwendeten Qualitätsparameter und ihres entsprechenden Gewichts berechnet wird.

2. Computerimplementiertes Verfahren nach Anspruch 1, wobei der Netzwerkqualitätsanzeiger durch die Kommunikationsanwendung (D) berechnet wird.

3. Computerimplementiertes Verfahren nach Anspruch 1, wobei der Netzwerkqualitätsanzeiger durch einen Telemetrieserver (K) berechnet wird, nachdem der Telemetrieserver (K) die Informationen von der Kommunikationsanwendung (D) oder von dem Kommunikationsdienst (F) empfangen hat.

4. Computerimplementiertes Verfahren nach Anspruch 1, wobei ein minimaler konfigurierbarer Schwellenwert für jeden verwendeten Qualitätsparameter bestimmt wird, wobei jeder Schwellenwert automatisch bestimmt oder manuell konfiguriert werden kann, wobei, wenn dieser automatisch bestimmt wird, ein maschineller Lernalgorithmus zum Finden des optimalen Schwellenwerts verwendet wird, wobei ein ungeeigneter Netzwerkqualitätsanzeiger bestimmt wird, wenn mindestens einer der Qualitätsparameter unter seinem entsprechenden Schwellenwert liegt.

5. Computerimplementiertes Verfahren nach einem der vorhergehenden Ansprüche, wobei das Kommunikationsnetzwerk ein drahtloses Netzwerk ist.

6. Computerimplementiertes Verfahren nach Anspruch 5, wobei der berechnete Netzwerkqualitätsanzeiger eine durchschnittliche Netzwerksignalstärke während des Kommunikationsanrufs umfasst und wobei das Verfahren ferner das Segmentieren des berechneten Netzwerkqualitätsanzeigers für verschiedene Signalstärkebereiche des drahtlosen Netzwerks umfasst.

7. Computerimplementiertes Verfahren nach Anspruch 3, oder 5 oder 6, wenn sie von Anspruch 3 abhängig sind, wobei die Informationen, welche von mindestens einem zusätzlichen Kommunikationsanruf gezogen werden, der durch mindestens einen zusätzlichen Benutzer, welcher mit dem Kommunikationsdienst (F) durch das Kommunikationsnetzwerk verbunden ist, zum Berechnen des Netzwerkqualitätsanzeigers verwendet wird, durchgeführt wird.

8. Computerimplementiertes Verfahren nach einem der vorhergehenden Ansprüche, ferner das Verwenden des berechneten Netzwerkqualitätsanzeigers umfassend, um zu bestimmen, ob sich die Kommunikationsanwendung (D) bei dem Kommunikationsdienst (F) durch das Kommunikationsnetzwerk registriert, damit der erste Benutzer (B) weitere Kommunikationsanrufe von/bei dem mindestens zweiten Benutzer (A) über ein VoIP empfängt/durchführt.

9. Computerimplementiertes Verfahren nach Anspruch 8, welches das Registrieren der Kommunikationsanwendung (D) bei dem Kommunikationsdienst (F) durch das Kommunikationsnetzwerk umfasst, wenn der berechnete Netzwerkqualitätsanzeiger über oder gleich einem Schwellenwert ist.

10. Computerimplementiertes Verfahren nach Anspruch 8, wobei, falls der berechnete Netzwerkqualitätsanzeiger unter einem bestimmten Schwellenwert liegt, die Kommunikationsanwendung (D) die Registrierung bei dem Kommunikationsdienst (F) durch das Kommunikationsnetzwerk nicht anfragt und der erste Benutzer (B) das Empfangen/Durchführen von weiteren Kommunikationsanrufen über ein PSTN-Netzwerk umfasst.

11. Computerimplementiertes Verfahren nach Anspruch 8, wobei, falls der berechnete Netzwerkqualitätsanzeiger unter einem bestimmten Schwellenwert liegt, der Kommunikationsdienst (F) das Ablehnen der Registrierung der Kommunikationsanwendung (D) durch das Kommunikationsnetzwerk umfasst und der erste Benutzer (B) das Empfangen/Durchführen von weiteren Kommunikationsanrufen über ein PSTN-Netzwerk umfasst.

12. Computerimplementiertes Verfahren nach Anspruch 8, wobei der Kommunikationsdienst (F), falls der berechnete Netzwerkqualitätsanzeiger unter einem bestimmten Schwellenwert liegt, Folgendes umfasst:
- Annehmen der Registrierung der Kommunikationsanwendung (D) durch das Kommunikationsnetzwerk und
- Benachrichtigen der Kommunikationsanwendung (D) darüber, dass der berechnete Netzwerkqualitätsanzeiger unter einem bestimmten Schwellenwert liegt.

13. Computerimplementiertes Verfahren nach Anspruch 12, ferner das Deregistrieren der Kommunikationsanwendung (D) aus dem Kommunikationsdienst (F) und das Empfangen/Durchführen von weiteren Kommunikationsanrufen über ein PSTN-Netzwerk durch den ersten Benutzer umfassend.

14. Computerprogrammprodukt, welches ausführbare Anleitungen umfasst, die, wenn sie von einem oder mehreren Prozessoren eines Computersystems ausgeführt werden, das Durchführen des Verfahrens nach einem der vorhergehenden Ansprüche 1 bis 13 veranlasst.

## Revendications

1. Procédé mis en oeuvre par ordinateur pour déterminer des indicateurs de qualité de réseau, comprenant :
- la réalisation d'au moins un appel de communication, entre un premier utilisateur (B), ayant un
dispositif mobile (H) avec une application de communication (D) installée dans celui-ci qui est raccordée à un service de communication VoIP (F) à travers un réseau de communication,
avec au moins un deuxième utilisateur (A) à travers ledit service de communication (F) ; et
- le calcul, basé sur des informations extraites dudit au moins un appel de communication, au moyen de l'exécution d'un algorithme fonctionnant dans un processeur, un indicateur de qualité décrivant des conditions techniques dudit réseau de communication utilisé pour réaliser le au moins un appel de communication,
dans lequel lesdites informations sont extraites du au moins un appel de communication par l'application de communication (D) ou par le service de communication (F) et comporte au moins l'un des identifiants du réseau de communication utilisé ou des informations de localisation du dispositif mobile (H) pendant l'appel de communication, et des paramètres de qualité en lien avec au moins un appel de communication comportant au moins l'un parmi :
• la durée de l'appel de communication ;
• une durée d'appel moyenne, ou ACD ;
• un taux de réponse d'appel, ou ASR ;
• une indication numérique décrivant si l'appel de communication est un appel court ;
• un score d'indication numérique de l'appel de communication ; et
• un résultat d'appel indiquant si l'appel de communication a été rompu ou raccroché, ou si les autres appels de communication entre le premier utilisateur (B) et le deuxième utilisateur (A) ont été répétés après l'appel de communication
le procédé étant **caractérisé en ce que** chacun des paramètres de qualité utilisés pour lesdites informations a un poids associé, automatiquement déterminé ou manuellement configuré, dans lequel si le(s) poid(s) est(sont) automatiquement déterminé(s) le procédé comprend l'utilisation d'un algorithme d'apprentissage de machine pour trouver un poids optimal, dans lequel l'indicateur de qualité de réseau est calculé en réalisant la somme des produits de chacun des paramètres de qualité utilisés et leur poids correspondants.

2. Procédé mis en oeuvre par ordinateur selon la revendication 1, dans lequel l'indicateur de qualité de réseau est calculé par l'application de communication (D).

3. Procédé mis en oeuvre par ordinateur selon la revendication 1, dans lequel l'indicateur de qualité de réseau est calculé par un serveur de télémétrie (K) après que le serveur de télémétrie (K) a reçu lesdites informations depuis l'application de communication (D) ou depuis le service de communication (F).

4. Procédé mis en oeuvre par ordinateur selon la revendication 1, dans lequel un seuil configurable minimum est déterminé pour chaque paramètre de qualité utilisé, dans lequel chaque seuil est automatiquement déterminé ou manuellement configuré, dans lequel s'il est automatiquement déterminé un algorithme d'apprentissage de machine est utilisé pour trouver le seuil optimal, dans lequel un indicateur de qualité de réseau non approprié est déterminé lorsqu'au moins l'un des paramètres de qualité est en dessous de son seuil correspondant.

5. Procédé mis en oeuvre par ordinateur selon l'une quelconque des revendications précédentes, dans lequel le réseau de communication est un réseau sans fil.

6. Procédé mis en oeuvre par ordinateur selon la revendication 5, dans lequel l'indicateur de qualité de réseau mis en oeuvre par ordinateur comprend une force de signal de réseau moyenne pendant l'appel de communication, et le procédé comprenant en outre la segmentation de l'indicateur de qualité de réseau calculé pour différents intervalles de forces de signal dudit réseau sans fil.

7. Procédé mis en oeuvre par ordinateur selon la revendication 3, ou 5 ou 6 lorsqu'elle dépend de la revendication 3, dans lequel les informations extraites d'au moins un appel de communication supplémentaire réalisé par au moins un utilisateur supplémentaire raccordé audit service de communication (F) à travers ledit réseau de communication sont utilisées pour calculer l'indicateur de qualité de réseau.

8. Procédé mis en oeuvre par ordinateur selon l'une quelconque des revendications précédentes, comprenant en outre l'utilisation de l'indicateur de qualité de réseau calculé pour déterminer si ladite application de communication (D) est inscrite dans ledit service de communication (F) à travers ledit réseau de communication afin que le premier utilisateur (B) reçoive/réalise, en outre, les appels depuis/à au moins le deuxième utilisateur (A) à travers un VoIP.

9. Procédé mis en oeuvre par ordinateur selon la revendication 8, comprenant l'inscription de l'application de communication (D) au service de communication (F) à travers ledit réseau de communication si l'indicateur de qualité de réseau calculé est au-dessus ou égal à un seuil donné.

10. Procédé mis en oeuvre par ordinateur selon la revendication 8, dans lequel dans le cas où l'indicateur de qualité de réseau calculé est en dessous d'un seuil donné, l'application de communication (D) ne requière pas l'inscription au service de communication (F) à travers ledit réseau de communication, et le premier utilisateur (B) comprenant la réception/réalisation, en outre, d'appels de communication à travers un réseau RTC.

11. Procédé mis en oeuvre par ordinateur selon la revendication 8, dans lequel dans le cas où l'indicateur de qualité de réseau calculé est en dessous d'un seuil donné, le service de communication (F) comprenant le refus de l'inscription de l'application de communication (D) à travers le réseau de communication, et le premier utilisateur (B) comprenant la réception/réalisation, en outre, d'appels de communication à travers un réseau RTC.

12. Procédé mis en oeuvre par ordinateur selon la revendication 8, dans lequel le service de communication (F), dans le cas où l'indicateur de qualité de réseau calculé est en dessous d'un seuil donné, comprend :
- accepter l'inscription de l'application de communication (D) à travers ledit réseau de communication, et
- informer l'application de communication (D) que l'indicateur de la qualité de réseau calculé est en dessous du seuil donné.

13. Procédé mis en oeuvre par ordinateur selon la revendication 12, comprenant en outre la préinscription, de l'application de communication (D) du service de communication (F), et la réception/réalisation du premier utilisateur, en outre, d'appels de communication à travers un réseau RTC.

14. Produit de logiciel informatique comprenant des instructions exécutables qui, lorsqu'elles sont exécutées par l'un ou plusieurs processeurs d'un système informatique, font réaliser le procédé au système informatique selon l'une quelconque des revendications précédentes 1 à 13.
